# EUROPEAN PATENT SPECIFICATION

(11) **EP 0 931 646 B1**
(45) Date of publication and mention of the grant of the patent: **17.04.2002**
(21) Application number: 99107079.8
(22) Date of filing: 26.07.1991
(51) Int. Cl.: B32B 27/06, B65D 65/40

(54) **Improvements in or relating to laminates and packaging materials**
Verbundstoffe und Verpackungsmaterialien
Stratifiés et matériaux de conditionnement améliorés

(30) Priority: 26.07.1990 GB 9016440
(43) Date of publication of application: 28.07.1999
(62) Divisional of application: 91914036.8
(73) Proprietor: ELOPAK SYSTEMS AG, 8152 Glattbrugg (CH)
(72) Inventor: Flom, Atle, 0266 Oslo (NO)
(74) Representative: Burrows, Anthony Gregory

(56) References cited:
- EP-A- 0 096 581
- EP-A- 0 174 198
- EP-A- 0 215 630
- EP-A- 0 318 771
- GB-A- 1 518 302

## Description

This invention relates to laminates and packaging materials.

A wide variety of packaging materials is known. Many are in the form of laminates in order that the material may have a desired combination of properties not available from a single layer of a single composition.

For packaging cartons, known laminates generally comprise one stiffening layer, often paperboard, which also reliably retains scores and folds therein.

A conventional packaging laminate comprises, progressing inwards, an external layer of LDPE (low density polyethylene), a paperboard layer, and an internal layer of LDPE. The LDPE layers are relatively good barriers to moisture migration and provide relatively good liquid-tight seals when heat-sealed during forming of the carton.

Another conventional laminate comprises an external layer of LDPE, a paperboard layer, a further layer of LDPE, a layer of aluminium foil, and an internal layer of LDPE. The further layer of LDPE provides a relatively good bond between the foil and the paperboard. The foil provides a good barrier to O₂ and light, so that this laminate is used particularly when the contents of the carton would otherwise be deleteriously affected by migration of substances, for example O₂ either inwards or outwards or by light. However, such foil has a number of disadvantages, for example it is relatively brittle and thus relatively liable to break during feeding, scoring and folding. Moreover, owing to its relatively smooth surface, it is relatively difficult to bond to LDPE or other polymers. Moreover, the further layer of LDPE allows significant O₂ penetration at the sealed seams and through defects, such as pinholes or cracks, in the foil.

Various alternatives have therefore been proposed.

One such alternative is disclosed in EP-A-0124772, in which the foil is replaced by a foil consisting of an oriented plastics film, e.g. of polyester, PP (polypropylene), or PA (polyamide), with aluminium vapour-deposited upon that surface of the film facing towards the inside. The latter foil has the advantage of providing a relatively good barrier to O₂ and of being strong without being brittle. However, an LDPE layer is again used to bond the plastics film to the paperboard, so that O₂ penetration again occurs. A disadvantage of having the metallized surface of the foil facing towards the inside of the carton is that it is liable to become damaged by the heat of the seam-sealing, so reducing the O₂ barrier effect of that foil.

EP-A-0341937 discloses a range of laminates which basically comprise an external layer of LDPE, a paperboard substrate, a barrier layer preferably of aluminium foil, and at least one caulking layer of e.g. "SURLYN" adjacent to the foil, usually with an abuse-resistant layer. This range of laminates appears to be an attempt to counteract the brittleness of the foil by caulking any fractures which occur. However, not only does "SURLYN" have a relatively low resistance to O₂ penetration, but also the minimum number of layers shown is eight and the maximum twelve, so that the laminate would be relatively expensive and difficult to produce.

EP-A-0318771 discloses a liquid-packaging laminate which comprises an external thermoplastics layer, a stiffening board layer, an EVOH layer, an aluminium foil layer, and an internal thermoplastics layer. A moisture-permeable layer, for example of "NYLON", may be included between the board layer and the EVOH layer.

EP-A-0174198 discloses a liquid-packaging laminate comprised of an external layer of paper, or plastics such as polyamide, polyethylene, polypropylene or polyester, a polyolefin layer of for example polyethylene, polypropylene or EVA, an aluminium foil layer, and an internal polyester layer.

EP-A-0215630 discloses a liquid-packaging laminate comprising an external PETG layer, a paperboard layer, an adhesive layer, a layer of PET, aluminium foil, PVDC, EVOH or NYLON, and an internal PETG layer.

EP-A-0096581 discloses a wide variety of examples of laminates, but each of several layers and including an external polypropylene or polyamide film layer, with an aluminium layer vacuum-deposited either directly on the inner surface of the film or on a gold coating on that inner surface.

Other alternatives are disclosed in US-A-4701360; EP-A-0237235 and WO-89/12406.

According to a first aspect of the present invention, there is provided a laminate comprising first and second layers which serve to stiffen the laminate, and a third layer intermediate the first and second layers and by way of which the first and second layers are tied together, said second layer comprising surface-coated material, characterized in that the surface coating is at that surface of said material facing towards said first layer.

According to a second aspect of the present invention, there is provided a packaging container comprised of a laminate comprising inner and outer layers which serve to stiffen the laminate, and an intermediate layer intermediate the inner and outer layers and by way of which the inner and outer layers are tied together, said inner layer comprising surface-coated material, characterized in that the surface coating is at that surface of said material facing towards said outer layer.

Owing to these aspects of the invention, the surface coating is less liable to damage by heat-sealing.

According to a third aspect of the present invention, there is provided a method of providing a packaging material, comprising selecting one or more of the layers A to E mentioned herein.

The layer A constitutes either the sole layer of the packaging material or a substrate carrying one or more other layers B to E mentioned herein. The layer A may consist ofone or more of the following substances:-

### LAYER A

- Foamed/Expanded Plastics, for example X-PS (expanded polystyrene) and X-PP (expanded PP).
- Board (i.e. wood-fibre-based material), for example paper and paperboard.
- Artificial-fibre-based material, which may be non-woven or glass fibres
- Corrugated paper and/or plastics material
- Polymer-based material, for example PO (polyolefin), PA, EVOH (ethylene vinyl alchohol co-polymer), HDPE (high density polyethylene), LDPE, PC (polycarbonate), PET (polyethylene terephthalate), and PP.
- Metallized material, for example M-PET (metallized PET),M-OPP (metallized oriented PP), M-EVOH, M-PA and M-paper.
- Non-metallic surface-coated material, for example G-PET (glass-coated PET) and G-OPP (glass-coated OPP)
- Wood, for example plywood.
- Leather
- Layer with windows for inspection and display of the contents
- Layer with perforations, holes or other features for opening, pouring, folding, ventilating, etc.
- Plastics profiles including hollow profiles.

The layer B is the outermost layer of the packaging material and may consist of one or more of the following:-

### LAYER B

- PO, for example LDPE, HDPE, LLDPE (linear LPDE) and PP.
- Other thermoplastics, for example PC, PET, polyesters, co-polyesters, EVOH, PA
- Printing
- Metallized outside layer
- Lacquers
- Preprinted films laminated to the outside
- Aluminium foil
- Holograms
- Cross-linked polymers hardened by radiation, chlorination, etc
- Mixed polymers to achieve heat-sealability and compatibility with an innermost plastics surface.
- Adhesives, tie layers, for example "SURLYN", "BYNEL" and "PRIMACORE".

The layer C is the innermost layer and may consist of one or more of the following substances selected from within one or more of the following Groups and Sub-groups:-

### LAYER C

Barriers (Group C1): EVOH; PVdC (polyvinylidine chloride); PVC (polyvinyl chloride); PA and PA-copolymers; Al-foil; PET; Polyesters and co-polyesters; PAN (polyacrylonitrile); LDPE, LLDPE and HDPE; PC (polycarbonate); PP; PVOH (polyvinyl alchohol); PBT (polybutylene terephthalate); vinyl chloride co-polymer; filled polymers, for example mica-filled EVOH; metallized substrates, for example M-EVOH; substrates with non-metallic surface coatings; lacquers; cross-linked polymers hardened by radiation, chlorination, etc., mixed polymers; greaseproof paper; Glassine; Cellophane; adhesives; and tie layers,
   which may be provided by
   - Extrusion- (including co-extrusion-)coating
   - Extrusion- (including co-extrusion-)laminating
   - Laminating by adhesives and of which the following Sub-groups are barriers to:-
      O₂, CO₂, flavours, odours, taste components and fragrances (Sub-Group C1a)
         EVOH; PVDC; PA and PA-copolymers; Al-foil; PET; polyesters and co-polyesters PAN; metallized substrates; substrates with non-metallic surface coatings; cross-linked polymers; mixed polymers; greaseproof paper; by Glassine; Cellophane; PVOH; filled polymers
      N₂ (Suh-Group C1b) Al-foil; EVOH; Metallized substrates; substrates with non-metallic surface coatings
      Essential oils (Sub-Group C1c) EVOH; PET; PC; PAN; polyesters and co-polyesters; PA and PA co-polymers; Al-foil; greaseproof paper and Cellophane,
      Water and water vapour (Sub-Group C1d) PO, for example PE, LDPE, HDPE, and PET; Al-foil; metallized substrates; substrates with non-metallic surface coatings; mixed polymers and tie layers.
      Vegetable oils (Sub-Group C1e) polyesters and co-polyesters; Al-foil; G-PET, and M-PET.
Abuse-resistant layers (Group C2):
   Hard for abrasion resistance (Sub-Group C2a)
      EVOH; PA; PET; polyesters; PAN; PP; Oriented films; lacquers; hardened cross-linked polymers; PC; greaseproof paper; Glassine; Cellophane; PBT; PVC and HDPE.
   Ductile (Sub-group C2b) : LDPE, HDPE and LLDPE; lacquers; adhesives and tie layers.
   Heat-resistant (Sub-Group C2c) : EVOH; PC; PET; HDPE; Al-foil; greaseproof paper; Glassine and Cellophane
Adhesives (Group C3) EVOH; PVdC; PVC; PA and PA-co-polymers; PET; Polyesters and co-polyesters; PAN; LDPE; LLDPE, and HDPE; PC; PP; PVOH; PBT; Vinyl chloride co-polymer; filled polymers, for example mica-filled EVOH; lacquers; hardened cross-linked polymers; mixed polymers and tie layers,
   which may be provided by
   - Extrusion- (including co-extrusion-) coating
   - Extrusion- (including co-extrusion-) laminating
   - Laminating by adhesives
Flavour-/fragrance-enhancers (Group 4) ;
Oxygen scavengers (Group C5) ;
Preservatives (Group C6) ;
Susceptors (Group C7) ; (for converting micro-wave radiation into heat).

The layers A and C may contact each other, or between the layers A and C there may be one or more layers D consisting of one or more of the following substances selected from within one or more of the following Groups and Sub-Groups:-

### LAYER(S) D

Barriers (Group D1) : As for Group C1 herein.
Abuse-Resistant (Group D2): As for Group C2 herein.
Adhesives (Group D3) : As for Group C3 herein.
Flavour-Fragrance-Enhancers (Group D4)
Oxygen Scavengers (Group D5)
Susceptors (Group D6)
Light protection (Group D7) : Al-foil; metallized substrates; greaseproof paper; filled polymers; pigmented polymers; board; paper; metallized paper; unbleached paper and coated paper.
Stiffening (Group D8) :
   - Foamed/expanded plastics, for example X-PS; and X-PP
   - Board wood-fibre-based material, for example paper and paperboard
   - Artificial-fibre-based material, which may be non-woven or glass fibres
   - Corrugated paper and/or plastics material
   - Polymer-based material, for example PO, PA, EVOH, HDPE, LDPE, PC, PET, and PP
   - Metallized material, for example M-PET, M-OPP, M-EVOH, M-PA, and M-paper
   - Non-metallic surface-coated material, for example G-PET and G-OPP
   - Wood, for example plywood
   - Leather
Spacing/Filling (Group D9) : foam; foamed plastics; expanded plastics and corrugated plastics.

The layers A and B may contact each other, or between the layers A and B there may be one or more layers E consisting of one or more substance selected from within one or more of the Groups D1 to D9 mentioned herein.

Preferably, there is provided a laminate comprising first and second layers which serve to stiffen the laminate, and a third layer intermediate the first and second layers and by way of which the first and second layers are tied together.

One or both of the first and second layers may comprise paperboard, stiff plastics, plastics sheet, foamed plastics, kraft paper, grease-proof paper, coated films, metal or plastics foil, or metallized plastics foil, for example.

Any one or more of the layers may constitute a barrier to light or to migration of moisture, water vapour, gases such as CO₂,O₂, or N₂, essential oils, flavour or aroma compounds, perfumes, or volatile compounds and/or may contain scavenging material, particularly O₂-scavenging material. The barrier material may incorporate additives to obtain particular properties, such as pigments to obtain protection against light, and/or be any suitable PO, such as PE, barrier films such as EVOH, metallized plastics, PA, metal foil, greaseproof paper, or coated films.

Externally of the first and/or second layer(s) may be one or more further layers having barrier, scavenging, protective and/or sealing properties. The barrier property can be provided by any of the barrier materials listed in the preceding paragraph. The protective property can be provided by PE (against abrasion). The sealing property can be provided by PE and/or other sealing polymers.

The laminate is particularly suitable for packaging purposes, especially the packaging of food and other products sensitive to migration through package walls and/or intended to be of a long-life character. Among the packages for which it is especially useful are gable-topped and flat-topped cartons.

In one preferred version of the laminate, a polymer which constitutes a relatively good barrier to O₂ migration, e.g. EVOH or a PA (such as MXD6), forms the third layer and the first layer is formed by a paperboard, stiffening layer onto which the EVOH or PA is extruded directly or indirectly. Thereafter, a material having both stiffening and O₂ barrier properties, such as M-PET, G-PET, M-OPP, G-OPP,or M-EVOH, or greaseproof paper, as the second layer, is laid onto the third layer, thereby itself to provide a further barrier to O₂ migration and also to protect the third layer against heat utilized during subsequent heat-sealing of carton blanks, for example. Where the second layer is a material with a coating at one of its surfaces, for example M-PET, G-PET, M-OPP, G-OPP, or M-EVOH the coated surface is directed towards the third layer, thereby to protect the surface coating itself against such heat. Greaseproof paper has the advantage over M-PET, G-PET, M-OPP, G-OPP and M-EVOH, that it is cheaper for the same stiffness. Upon the outside of the second layer is extruded directly or indirectly a moisture barrier layer such as PE, which protects against moisture the second and third layers, which in the case of greaseproof paper, does not constitute a barrier to moisture, and, in the case of EVOH or PA, have their O₂ barrier properties decreased by moisture. The third layer, in the case of EVOH or PA, is much less liable to crack on scoring or folding than is the second layer in the case of greaseproof paper or the metal or glass coating in the case of M-PET, G-PET, M-OPP, G-OPP, or M-EVOH, and thus is much better able to maintain the O₂ barrier property of the laminate during subsequent conversion of the laminate into a carton.

If the first layer is semibleached multilayer paperboard and the second layer is unbleached greaseproof paper, the laminate gives very good protection against light.

The O₂ barrier effect of EVOH or PA combined with M-PET, G-PET, M-OPP, G-OPP, M-EVOH or greaseproof paper appears to be overall greater than the simple sum of their individual O₂ barrier effects.

On the outside of the paperboard layer is a layer of a material, such as PE, constituting a moisture-barrier and heat-sealing material.

The EVOH or PA can be applied as a monolayer or as a co-extrusion with other plastics material; it is preferably attached to at least the second layer by means of a tie layer. It is advantageous if the EVOH or PA is applied to the M-PET, G-PET, M-OPP, G-OPP or greaseproof paper in a molten state, since it thereby fills the pores in the coated surface or the greaseproof paper surface and thus increases the combined O₂ barrier effect of those two layers.

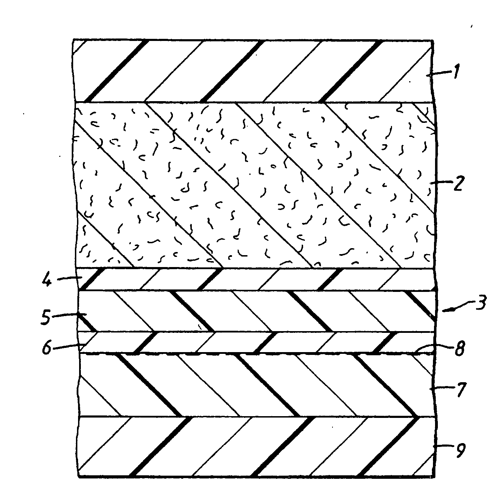

In a container made from the laminate, the layers are preferably arranged as shown in the single Figure of the accompanying drawing, which is a fragmentary cross-section through a packaging laminate. The layer arrangement is as follows, progressing inwards:-
(a) a moisture-barrier and heat-sealing layer 1 (10 to 30 g/m² LDPE)
(b) a paperboard stiffening layer 2 (150 to 400 g/m² board)
(c) O₂ barrier polymer 3, such as EVOH or polyamide (3 microns to 15 microns, preferably 3 microns to 7 microns); for example in the form "thin tie layer (4)/EVOH or PA(5)/thin tie layer (6)"
(d) M-PET, G-PET, M-OPP, G-OPP 7 (6 microns to 25 microns, preferably 9 microns to 14 microns) with its coated surface 8 directed outwards, or greaseproof paper (25 to 100 g/m²)
(e) a moisture-barrier and heat-sealing layer 9 (10 to 70 g/m² LDPE).

The surfaces of the various layers may be treated, for example flame- or corona-discharge-treated, to enhance adhesion or sealability.

A particular example of this preferred version is now given:-

### Example I

230g/m² of Duplex board is flame-treated on both sides and extrusion coated on its outside with a layer of 14g/m² LDPE. The resulting laminate is flipped over, then the inside of the Duplex board is brought face-to-face with the outside of a layer of greaseproof paper (50g/m²) in a laminating station of an extrusion coating line and between them there is co-extruded a three-layer structure consisting of an outside layer of LDPE (20g/m²), an intermediate tie layer ("BYNEL", 5g/m²), and an inside layer of EVOH (7g/m²). The resulting laminate then has a layer of LDPE (35g/m²) extrusion-coated onto its inside.

The final laminate has a greatly improved O₂ barrier effect and a greatly improved tolerance of abuse compared with using the same thickness of EVOH or greaseproof paper as the single barrier layer.

In another preferred version of the laminate, the first layer is formed by paperboard and the second layer is formed by metallized or glass-coated barrier plastics, e.g. aluminium metallized EVOH film, with the third layer being PE or a suitable tie tying the aluminium-coated surface of the film to the paperboard. Again, the innermost and outermost layers of the laminate are of a moisture-barrier and heat-sealing material, such as PE.

In a container made from the laminate, the layers are preferably arranged as follows, progressing inwards:-
(a) a moisture-barrier and heat-sealing layer (10 to 30 g/m² LDPE)
(b) a paperboard stiffening layer (150 to 400 g/m² Duplex)
(c) polyethylene or tie (10 to 50 g/m² LDPE)
(d) aluminium-metallized material, such as aluminium-metallized greaseproof paper, or polymer film, for example Cellophane film or EVOH film (7 microns to 20 microns)
(e) a moisture-barrier and heat-sealing layer (10 to 70 g/m² LDPE).

A particular example of this preferred version is now given:-

### Example II

230g/m² of Duplex board is flame-treated on both sides and extrusion-coated on its outside with a layer of 14g/m² LDPE. The resulting laminate is flipped over, then the inside of the Duplex board is brought face-to-face with the metallized surface of the metallized EVOH film (12 microns) in a laminating station of an extrusion coating line and between them there is co-extruded a two-layer structure consisting of an outer layer of LDPE (25g/m²) and an inner tie layer ("SURLYN", 5g/m²). The resulting laminate is then co-extrusion coated with an outer tie layer ("BYNEL", 5g/m²) and an inner layer of LDPE (30g/m²).

The final laminate has a greater resistance to heat damage of the aluminium of the metallized EVOH film compared with a corresponding laminate with that aluminium on the inside of the film.

## Claims

1. A laminate comprising first and second layers (2, 7) which serve to stiffen the laminate, and a third layer (5) intermediate the first and second layers (2, 7) and by way of which the first and second layers (2, 7) are tied together, said second layer (7) comprising surface-coated material, **characterized in that** the surface coating (8) is at that surface of said material facing towards said first layer (2).

2. A laminate according to claim 1, wherein said surface-coated material (7) comprises metallized polymer.

3. A laminate according to claim 2, wherein said metallized polymer comprises M-PET, M-OPP, or M-EVOH.

4. A laminate according to claim 1, wherein said surface-coated material (7) comprises glass-coated polymer.

5. A laminate according to claim 4, wherein said glass-coated polymer comprises G-PET or G-OPP.

6. A packaging container comprised of a laminate comprising inner and outer layers (7, 2) which serve to stiffen the laminate, and an intermediate layer (5) intermediate the inner and outer layers (7, 2) and by way of which the inner and outer layers (7, 2) are tied together, said inner layer (7) comprising surface-coated material, **characterized in that** the surface coating (8) is at that surface of said material facing towards said outer layer (2).

7. A container according to claim 6, wherein said surface-coated material (7) comprises metallized polymer.

8. A container according to claim 7, wherein said metallized polymer comprises M-PET, M-OPP or M-EVOH.

9. A container according to claim 6, wherein said surface-coated material (7) comprises glass-coated polymer.

10. A container according to claim 9, wherein said glass-coated polymer comprises G-PET or G-OPP.

## Patentansprüche

1. Laminat, das erste und zweite Schichten (2, 7), die dazu dienen, das Laminat zu versteifen, sowie eine dritte Schicht (5) zwischen den ersten und den zweiten Schichten (2, 7) umfasst, durch die die ersten und die zweiten Schichten (2, 7) miteinander verbunden sind, wobei die zweite Schicht (7) oberflächenbeschichtetes Material umfasst, **dadurch gekennzeichnet, dass** sich die Oberflächenbeschichtung (8) auf derjenigen Fläche des Materials befindet, die der ersten Schicht (2) zugewandt ist.

2. Laminat gemäß Anspruch 1, wobei das oberflächenbeschichtete Material (7) ein metallisiertes Polymer umfasst.

3. Laminat gemäß Anspruch 2, wobei das metallisierte Polymer M-PET, M-OPP oder M-EVOH umfasst.

4. Laminat gemäß Anspruch 1, wobei das oberflächenbeschichtete Material (7) ein glasbeschichtetes Polymer umfasst.

5. Laminat gemäß Anspruch 4, wobei das glasbeschichtete Polymer G-PET oder G-OPP umfasst.

6. Verpackungsbehälter, der ein Laminat umfasst, das innere und äußere Schichten (7, 2), die dazu dienen, das Laminat zu versteifen, sowie eine Zwischenschicht (5) zwischen den inneren und den äußeren Schichten (7, 2) umfasst, durch die die inneren und die äußeren Schichten (7, 2) miteinander verbunden sind, wobei die innere Schicht (7) oberflächenbeschichtetes Material umfasst, **dadurch gekennzeichnet, dass** sich die Oberflächenbeschichtung (8) auf derjenigen Fläche des Materials befindet, die der äußeren Schicht (2) zugewandt ist.

7. Behälter gemäß Anspruch 6, wobei das oberflächenbeschichtete Material (7) ein metallisiertes Polymer umfasst.

8. Behälter gemäß Anspruch 7, wobei das metallisierte Polymer M-PET, M-OPP oder M-EVOH umfasst.

9. Behälter gemäß Anspruch 6, wobei das oberflächenbeschichtete Material (7) ein glasbeschichtetes Polymer umfasst.

10. Behälter gemäß Anspruch 9, wobei das glasbeschichtete Polymer G-PET oder G-OPP umfasst.

## Revendications

1. Un stratifié comprenant de première et deuxième couches (2, 7) qui servent à rigidifier le stratifié, et une troisième couche (5) intermédiaire aux première et deuxième couches (2, 7) et au moyen de laquelle les première et deuxième couches sont fixéss ensemble, ladite deuxième couche (7) comprenant une matière de revêtement de surface, **caractérisée en ce que** le revêtement de surface (8) se trouve au niveau de la surface de ladite matière dirigée vers ladite première couche (2).

2. Un stratifié selon la revendication 1, dans lequel ladite matière de revêtement de surface (7) comprend un polymère métallisé.

3. Un stratifié selon la revendication 2, dans lequel ledit polymère métallisé comprend M-PET, M-OPP ou M-EVOH.

4. Un stratifié selon la revendication 1, dans lequel ladite matière de revêtement de surface (7) comprend un polymère à revêtement de verre.

5. Un stratifié selon la revendication 4, dans lequel ledit polymère à revêtement de verre comprend G-PET ou G-OPP.

6. Un récipient de conditionnement se composant d'un stratifié comprenant des couches interne et externe (7, 2) qui servent à rigidifier le stratifié, et une couche intermédiaire (5) qui est intermédiaire aux couches interne et externe (7, 2) et au moyen de laquelle les couches interne et externe (7, 2) sont fixées ensemble, ladite couche interne (7) comprenant une matière de revêtement de surface, **caractérisée en ce que** le revêtement de surface (8) se trouve au niveau de la surface de ladite matière dirigée vers ladite couche externe (2).

7. Un récipient selon la revendication 6, dans lequel ladite matière de revêtement de surface (7) comprend un polymère métallisé.

8. Un récipient selon la revendication 7, dans lequel ledit polymère métallisé comprend M-PET, M-OPP ou M-EVOH.

9. Un récipient selon la revendication 6, dans lequel ladite matière de revêtement de surface (7) comprend un polymère à revêtement de verre.

10. Un récipient selon la revendication (9) dans lequel ledit polymère à revêtement de verre comprend G-PET ou G-OPP.
